# EUROPÄISCHE PATENTSCHRIFT

(11) **EP 2 545 602 B1**
(45) Veröffentlichungstag und Bekanntmachung des Hinweises auf die Patenterteilung: **26.08.2015**
(21) Anmeldenummer: 11708719.7
(22) Anmeldetag: 07.03.2011
(51) Int. Cl.: H01M 2/02, H01M 2/12, H01M 2/30, H01M 2/06

(54) **ANSCHLUSSPOL FÜR EINEN AKKUMULATOR UND AKKUMULATORGEHÄUSE**
CONNECTING POLE FOR A RECHARGEABLE BATTERY AND RECHARGEABLE-BATTERY HOUSING
PÔLE DE CONNEXION POUR UN ACCUMULATEUR ET BOÎTIER D'ACCUMULATEUR

(30) Priorität: 03.06.2010 DE 102010022584; 09.03.2010 DE 102010010772
(43) Veröffentlichungstag der Anmeldung: 16.01.2013
(73) Patentinhaber: Johnson Controls Autobatterie GmbH & Co. KGaA, 30419 Hannover (DE)
(72) Erfinder: STREUER, Peter, 30559 Hannover (DE); LEDOUX, Anne-Laure, 30855 Langenhagen (DE)
(74) Vertreter: Meissner, Bolte & Partner GbR
(86) Internationale Anmeldenummer: PCT/EP2011/001103
(87) Internationale Veröffentlichungsnummer: WO 2011/110317

(56) Entgegenhaltungen:
- EP-A1- 0 836 237
- EP-A2- 0 590 284
- DE-C1- 4 241 393
- US-A- 6 030 723

## Beschreibung

Die Erfindung betrifft einen Anschlusspol für einen Akkumulator gemäß dem Oberbegriff des Anspruchs 1. Die Erfindung betrifft ferner ein Akkumulatorgehäuse oder ein Teil davon mit wenigstens einem derartigen Anschlusspol gemäß dem Anspruch 13.

Anschlusspole für Akkumulatoren dienen zur elektrischen Kontaktierung des Akkumulators mit elektrischen Einrichtungen, die von dem Akkumulator mit Strom versorgt werden sollen. Im Falle einer Starterbatterie für ein Kraftfahrzeug werden an zwei Anschlusspole der Starterbatterie die entsprechenden Polklemmen geschraubt

Ein Anschlusspol für einen Akkumulator ist aus der DE 42 41 393 C2 bekannt Der dortige Anschlusspol weist ein Sockelteil mit umlaufenden Rillen auf, das in einem Gehäuse des Akkumulators einsetzbar ist Die umlaufenden Rillen bilden mit einem die Rillen ausfüllenden Kunststoff eine Labyrinthdichtung. Ein weiterer Anschlußpol ist aus der EP 0 836 237 A1 bekannt.

Der Erfindung liegt die Aufgabe zugrunde, einen Anschlusspol mit einem gegenüber dem bekannten Anschlusspol geringeren Gewicht anzugeben. Der Erfindung liegt ferner die Aufgabe zugrunde, ein entsprechendes Akkumulatorgehäuse mit einem solchen Anschlusspol mit einem geringeren Gewicht anzugeben.

Diese Aufgabe wird durch die in den Ansprüche 1 und 13 angegebene Erfindung gelöst. Die Unteransprüche geben vorteilhafte Ausgestaltungen der Erfindung an.

Gemäß der Erfindung wird vorgeschlagen, dass der Umfang der Außenwand des Anschlusspols in wenigstens einem nicht mit einem umlaufenden Vorsprung versehenen Abschnitt des Labyrinthabschnitts in von dem Anschlussabschnitt fortweisender Richtung zunimmt. Hierdurch lassen sich nahe dem Anschlussabschnitt, d.h. im oberen Bereich des Labyrinthabschnitts, geringere Außenumfänge des Anschlusspols realisieren, wodurch die Menge an erforderlichem Material für den Anschlusspol in diesem Bereich verringert werden kann.

Als Umfang der Außenwand des Anschlusspols in einem nicht mit einem umlaufenden Vorsprung versehenen Abschnitt des Labyrinthabschnitts werden somit solche Wandabschnitte verstanden, in denen kein umlaufender Vorsprung angeordnet ist, weder ganz noch teilweise. Im Ergebnis geht es um Wandabschnitte der Außenwand, in denen auch keine Übergänge zu umlaufenden Vorsprüngen vorgesehen sind. Mit der Erfindung kann somit ausgehend von dem unteren Ende des Anschlusspols der Außenumfang zum Anschlussabschnitt hin verkleinert werden. So kann z.B. vorgesehen sein, die Außenwand des Anschlusspols in wenigstens einem Abschnitt des Labyrinthabschnitts außerhalb des wenigstens einen umlaufenden Vorsprungs in von dem Anschlussabschnitt fortweisender Richtung konisch zu vergrößern. Hierdurch ist der Außenumfang des Anschlusspols in dem wenigstens einen Abschnitt des Labyrinthabschnitts außerhalb des wenigstens einen umlaufenden Vorsprungs in von dem Anschlussabschnitt fortweisender Richtung etwa linear vergrößert.

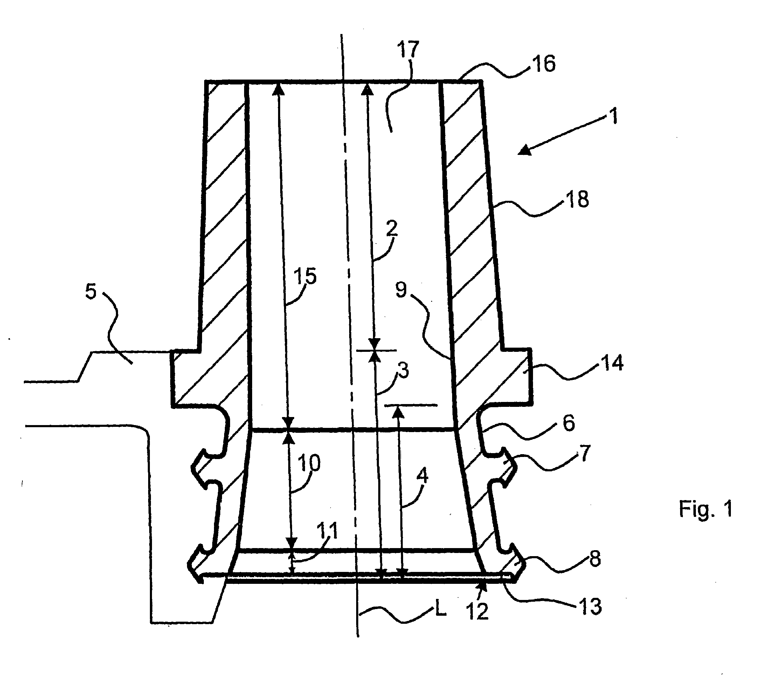

Der Begriff "Abschnitt" bezieht sich dabei auf Abschnitte in Längsrichtung des Anschlusspols, d.h. in Richtung der in Figur 1 dargestellten Längsachse L.

Wie erwähnt, kann durch die Erfindung vorteilhaft eine Materialeinsparung in dem oberen Bereich des Labyrinthabschnitts realisiert werden. Zugleich kann weiterhin eine ausreichende mechanische Stabilität des Anschlusspols gewährleistet werden. Die Einsparung des Materials des Anschlusspols, der z.B. aus Blei hergestellt ist, führt zu einer spürbaren Gewichtsverringerung des Anschlusspols und damit auch eines mit dem Anschlusspol versehenen Gehäuses eines Akkumulators. Mit der Materialeinsparung geht vorteilhaft auch eine Kosteneinsparung einher. Vorteilhaft ist die Außenwand des Anschlusspols in wenigstens einem Abschnitt konisch oder einschalig hyperboloid verlaufend, und zwar in einem Abschnitt, in dem nicht der umlaufende Vorsprung bzw. die umlaufenden Vorsprünge angeordnet sind.

Die Erfindung erlaubt es, auch den wenigstens einen im Labyrinthabschnitt vorgesehenen umlaufenden Vorsprung in seinem Durchmesser zu reduzieren. Hierdurch ergibt sich eine weitere Material- und Gewichtseinsparung. Es können auch mehrere umlaufende Vorsprünge vorgesehen sein.

Gemäß einer vorteilhaften Weiterbildung der Erfindung ist vorgesehen, dass der Umfang der Außenwand des Anschlusspols im gesamten Labyrinthabschnitt in den nicht mit einem umlaufenden Vorsprung versehenen Bereichen in von dem Anschlussabschnitt fortweisender Richtung zunimmt. Hierdurch kann die Materialeinsparung und damit die Gewichtseinsparung maximiert werden.

Gemäß einer vorteilhaften Weiterbildung der Erfindung weist der Labyrinthabschnitt eine geringere Erstreckung in Längsrichtung des Anschlusspols auf als der Befestigungsabschnitt. Dies erlaubt das Vorsehen weiterer Elemente in dem Befestigungsabschnitt ohne Beeinträchtigung des Labyrinthabschnitts.

Der umlaufende Vorsprung kann mit unterschiedlichen Profilen realisiert sein. Als Grundform für den umlaufenden Vorsprung sei eine ringartige Form genannt. Gemäß einer vorteilhaften Weiterbildung der Erfindung weist der wenigstens eine umlaufende Vorsprung ein hakenförmiges Profil auf. Der hakenförmige Bereich des Profils kann sich beispielsweise auf der Außenseite eines ringartig geformten Vorsprungs nach der zuvor genannten Grundform anschließen. Das hakenförmige Profil unterstützt wirksam die Labyrinthbildung zwischen dem Material des Anschlusspols und dem Kunststoff des umgebenden Gehäuses. Hierdurch kann die Dichtwirkung des Labyrinths weiter verbessert werden.

Gemäß der Erfindung ist der Anschlusspol innen hohl. Der Umfang der Innenwand des Anschlusspols nimmt in wenigstens einem ersten Abschnitt des Labyrinthabschnitts in von dem Anschlussabschnitt fortweisender Richtung zu. In einer vorteilhaften Weiterbildung der Erfindung kann der hinsichtlich des Umfangs zunehmende Abschnitt der Innenwand mit dem hinsichtlich des Umfangs zunehmenden Abschnitt der Außenwand überlappend ausgebildet sein. Gemäß der Erfindung verlaufen die Innewand und die Außnwand des Anschklusspols in dessen Längsrichtung Labyrinthabschnitt zumindest abschnittsweise parallel. Hierdurch lassen sich zumindest abschnittsweise in Längsrichtung des Anschlusspols gleich bleibende Wandstärken realisieren. Insgesamt lässt sich der Anschlusspol hierdurch weiter hinsichtlich Materialeinsparungen und Gewicht optimieren. Diese Weiter-bildung kann z.B. realisiert werden, indem der von einem konischen Abschnitt der Innenwand gebildete Winkel zur Längsachse des Anschlusspols im Wesentlichen gleich dem Winkel eines konischen Abschnitts der Außenwand zur Längsachse des Anschlusspols ist

Gemäß einer vorteilhaften Weiterbildung der Erfindung ist vorgesehen, dass der erste Abschnitt, in dem der Umfang der Innenwand zunimmt, in Längsrichtung des Anschlusspols nicht über den Abschnitt hinausragt, in dem der Umfang der Außenwand zunimmt. Insbesondere kann vorgesehen sein, dass der erste Abschnitt, in dem der Umfang der Innenwand zunimmt, sich bis in den Anschlussabschnitt erstreckt.

Gemäß einer vorteilhaften Weiterbildung der Erfindung ist vorgesehen, dass der erste Abschnitt, in dem der Umfang der Innenwand zunimmt, in Längsrichtung des Anschlusspols über den Abschnitt hinausragt, in dem der Umfang der Außenwand zunimmt. Dies erlaubt das Vorsehen weiterer besonders geformter Abschnitte der Innenwand.

Gemäß einer vorteilhaften Weiterbildung der Erfindung ist vorgesehen, dass der Anschlusspol innen hohl ist und der Umfang der Innenwand des Anschlusspols in dem Anschlussabschnitt in Richtung zum Labyrinthabschnitt hin zunimmt.

Gemäß einer vorteilhaften Weiterbildung der Erfindung ist vorgesehen, dass der Umfang der Innenwand und/oder der Außenwand monoton linear oder bogenförmig zunimmt. Die Zunahme des Umfangs kann somit mit einer linearen Kontur erfolgen, so dass die Innenwand bzw. die Außenwand zumindest abschnittsweise konisch verlaufen. Vorteilhaft kann auch eine bogenförmige Kontur vorgesehen sein, z.B. mit hyperboloidem Verlauf. Vorteilhaft können auch kombiniert konische und bogenförmige Abschnitte an dem Anschlusspol an der Innenwand bzw. der Außenwand vorgesehen sein.

Gemäß einer vorteilhaften Weiterbildung der Erfindung ist die bogenförmige Zunahme des Umfangs in von dem Anschlussabschnitts fortweisender Richtung progressiv. Hiermit steigt ausgehend von dem Anschlussabschnitt 2 fort die Winkeldifferenz der Außenwand bzw. der Innenwand gegenüber einer Längsachse des Anschlusspols an.

Gemäß einer vorteilhaften Weiterbildung der Erfindung weist die Außenwand und/oder die Innenwand in Längsrichtung des Anschlusspols einen einschalig hyperboloiden Verlauf auf. Hierbei können sämtliche sich durch Kegelschnitte ergebenden Konturen vorgesehen sein, insbesondere Hyperbel, Parabel, Konus, Ellipse. Es ist ebenfalls vorteilhaft, zumindest abschnittsweise an der Außenwand bzw. der Innenwand einen Verlauf gemäß einer Exponentialfunktion vorzusehen.

Der Anschlusspol kann insbesondere rotationssymmetrisch ausgebildet sein. In diesem Fall beziehen sich die vorherigen Ausführungen bezüglich des Umfangs der Innenwand oder der Außenwand auf deren jeweiligen Durchmesser.

Gemäß einer vorteilhaften Weiterbildung der Erfindung ist die Innenwand des Anschlusspols in wenigstens einem zweiten Abschnitt des Labyrinthabschnitts in von dem Anschlussabschnitt fortweisender Richtung konisch vergrößert. Die Innenwand bildet im zweiten Abschnitt einen größeren Winkel zur Längsachse des Anschlusspols als in dem ersten Abschnitt. Eine solche stufenweise Vergrößerung des Konuswinkels erlaubt das Vorsehen von Innenbereichen des Anschlusspols mit abgestufter Zentrierwirkung bei der Montage eines Akkumulators. Der innere, hohle Bereich des Anschlusspols ist zur Aufnahme eines Anschlussstifts vorgesehen, der sich durch den Anschlusspol hindurch bis in das Innere des Anschlussabschnitts erstreckt. Der Anschlussstift ist mit Elektrodenplattensätzen im Inneren des Akkumulators verbunden. Im Rahmen der Herstellung eines Akkumulators wird zunächst ein Gehäuseunterteil mit den Elektrodenplattensätzen, an denen Anschlussstifte bereits angebracht sind, versehen. Anschließend wird ein Deckel des Akkumulators, in dem Anschlusspole in Spritzgießtechnik eingeformt sind, auf das Gehäuseunterteil gesetzt. Hierbei ist eine einfache und schnelle Zentrierung der Anschlusspole gegenüber den Anschlussstiften angestrebt, um eine schnelle und rationelle Akkumulatorherstellung zu ermöglichen. Die konischen Innenabschnitte vereinfachen diese Zentrierung.

Ein weiterer Vorteil ist, dass bei der Herstellung des Deckels des Akkumulators ein unterer Dorn für die Innenabdichtung der Spritzgießmasse gegenüber der Umgebung schnell in dem zweiten konischen Abschnitt positioniert werden kann.

Gemäß einer vorteilhaften Weiterbildung der Erfindung ist der zweite Abschnitt auf der dem Anschlussabschnitt abgewandten Seite des ersten Abschnitts.

Gemäß einer vorteilhaften Weiterbildung der Erfindung ist der Umfang der Innenwand des Anschlusspols an dem dem Anschlussabschnitt abgewandten Ende des Anschlusspols diskontinuierlich verändert. Eine solche Diskontinuität bewirkt eine sprunghafte Veränderung des Innendurchmessers. Hierdurch kann z.B. ein ringförmiger Endabschnitt des Anschlusspols mit gegenüber dem ersten oder dem zweiten Abschnitt vergrößerten Durchmesser realisiert werden.

Gemäß einer vorteilhaften Weiterbildung der Erfindung weist der Anschlusspol in dem Befestigungsabschnitt zwischen dem Anschlussabschnitt und dem Labyrinthabschnitt einen umlaufenden Vorsprung mit einer Verzahnung am Außenumfang auf. Mittels der Verzahnung kann vorteilhaft eine Verdrehsicherung realisiert werden, die ein unerwünschtes Verdrehen des Anschlusspols in dem Material des Akkumulatorgehäuses verhindert. In einer vorteilhaften Weiterbildung der Erfindung weist die Verzahnung eine Anzahl von Zähnen im Bereich von 6 bis 9 auf. Insbesondere hat sich gezeigt, dass eine Anzahl von 8 Zähnen besonders vorteilhaft ist und einen guten Kompromiss zwischen der mechanischen Stabilität der Zähne des Anschlusspols und der Haltbarkeit des Anschlusspols in dem Kunststoffmaterial des Akkumulatorgehäuses ist. Eine zu hohe Anzahl von Zähnen führt zwangsläufig zu einer Verkleinerung der Abmessungen der einzelnen Zähne, wodurch die Stabilität der einzelnen Zähne abnimmt. Eine zu geringe Anzahl an Zähnen führt zu einer Abnahme der Wirksamkeit des Verdrehschutzes, da die Haltbarkeit des Anschlusspols im Kunststoffmaterial des Akkumulatorgehäuses abnimmt.

Gemäß einer vorteilhaften Weiterbildung der Erfindung ist der Anschlusspol innen hohl. Die Innenwand des Anschlusspols in dem Anschlussabschnitt weist einen konischen Verlauf auf. Gemäß einer vorteilhaften Weiterbildung der Erfindung erstreckt sich der konische Verlauf der Innenwand des Anschlusspols bis in den Befestigungsabschnitt hinein. In einer vorteilhaften Ausgestaltung der Erfindung kann vorgesehen sein, dass an den konischen Verlauf der Innenwand in dem Anschlussabschnitt sich der erste Abschnitt und daran der zweite Abschnitt der Innenwand des Anschlusspols anschließt.

Ein vorteilhaftes Akkumulatorgehäuse oder ein Teil davon weist wenigstens einen Anschlusspol der zuvor beschriebenen Art auf. Vorteilhaft ist der Befestigungsabschnitt des wenigstens einen Anschlusspols mittel Spritzgießtechnik in einem Akkumulatorgehäuseteil eingebettet. Das Akkumulatorgehäuseteil kann z.B. der Deckel des Akkumulators sein.

Die Erfindung wird nachfolgend anhand von Ausführungsbeispielen unter Verwendung von Zeichnungen näher erläutert.

Es zeigen
- Figur 1: - einen Anschlusspol in einer Schnittdarstellung in Längsrichtung und
- Figur 2: - einen Verlauf der Innenwand des Anschlusspols und
- Figur 3: - eine weitere Ausführungsform eines Anschlusspols in einer Schnittdarstellung in Längsrichtung und
- Figur 4: - Ausführungsformen des Anschlusspols in Draufsicht und
- Figuren 5 bis 7: - weitere Ausführungsformen des Anschlusspols in einer Schnittdarstellung in Längsrichtung.

In den Figuren werden gleiche Bezugszeichen für einander entsprechende Elemente verwendet.

Die Figur 1 zeigt einen Anschlusspol 1 in einer in Längsrichtung geschnittenen Darstellung. Der Anschlusspol 1 weist einen Anschlussabschnitt 2, einen Befestigungsabschnitt 3 und einen Labyrinthabschnitt 4 auf.

Der Anschlusspol 1 weist im Anschlussabschnitt 2 an seiner Außenseite eine Außenwand 18 und eine obere Abschlussfläche 16 auf. Auf der Außenseite des Anschlusspols 1 ist in dem Befestigungsabschnitt 3, angrenzend an den Anschlussabschnitt 2, ein umlaufender Vorsprung 14 angeordnet, der grundsätzlich etwa eine Ringform aufweisen kann. Der umlaufende Vorsprung 14 kann auch die nachfolgend noch näher erläuterte Verzahnung am Außenumfang aufweisen. An dem umlaufenden Vorsprung 14 schließt sich eine Außenwand 6 an der Außenseite des Anschlusspols 1 an, die in dem Labyrinthabschnitt 4 angeordnet ist. Die Außenwand 6 ist durch umlaufende Vorsprünge 7, 8, die jeweils ein hakenförmiges Profil aufweisen, unterbrochen. Der Anschlusspol 1 kann, abgesehen von der Verzahnung, z.B. als im Wesentlichen rotationssymmetrisches Bauteil ausgebildet sein.

Die Figur 1 zeigt beispielhaft im linken Bereich des Anschlusspols 1 ausschnittsweise ein im Spritzgießverfahren an den Anschlusspol 1 angeformtes Gehäuseteil 5 des Akkumulators. Wie erkennbar ist, ist der Anschlusspol in dem Befestigungsabschnitt 3 an seiner Außenseite in dem Material des Gehäuseteils 5 eingebettet. Durch die umlaufenden Vorsprünge 7, 8, 14 wird ein Labyrinth gebildet, das für eine gute Abdichtung des Inneren des Akkumulators gegenüber der Umgebung sorgt.

Der Anschlusspol 1 ist hohl ausgebildet. In einem in dem Anschlusspol 1 gebildeten Hohlraum 17 verläuft eine Innenwand 9 abschnittsweise konisch mit unterschiedlichen Winkeln der Innenwand 9 gegenüber der Längsachse L. In dem Labyrinthabschnitt 4 ist ein erster Abschnitt 10 der konisch verlaufenden Innenwand 9 sowie ein zweiter Abschnitt 11 dargestellt. Der zweite Abschnitt 11 schließt sich an dem ersten Abschnitt 10 auf der dem Anschlussabschnitt 2 gegenüberliegenden Seite des Anschlusspols 1 an. Auf der anderen Seite des ersten Abschnitts 10 ist ein weiterer konisch verlaufender Abschnitt 15 der Innenwand 9 vorgesehen, der sich von der oberen Abschlussfläche 16 bis in den Labyrinthabschnitt 4 erstreckt.

An den zweiten Abschnitt 11 schließt sich ein etwa ringförmiger Abschnitt 13 in dem Hohlraum 17 an. Hierbei wird der Durchmesser des Hohlraum 17 an der Stelle 12 sprungartig vergrößert.

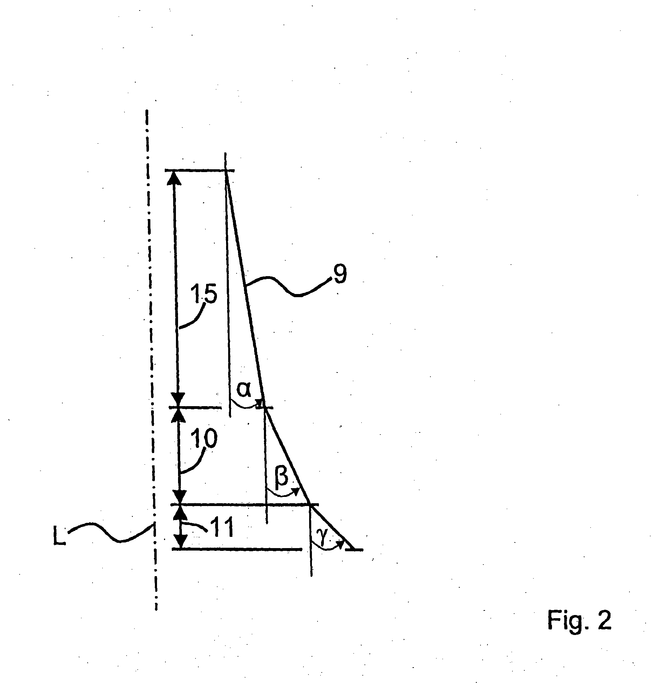

Die Figur 2 zeigt schematisch den Verlauf der Innenwand 9 in den Abschnitten 15, 10, 11. In dem Abschnitt 15 bildet die Innenwand 9 einen Winkel α gegenüber der Längsachse L. In dem ersten Abschnitt 10 bildet die Innenwand 9 einen Winkel β gegenüber der Längsachse L. In dem zweiten Abschnitt 11 bildet die Innenwand 9 einen Winkel γ gegenüber der Längsachse L. Vorteilhaft ist α < β < γ. Hierdurch ergibt sich eine monotone Zunahme des Konuswinkels von der oberen Abschlussfläche 16 hin in Richtung zu dem entgegensetzten Ende des Anschlusspols 1.

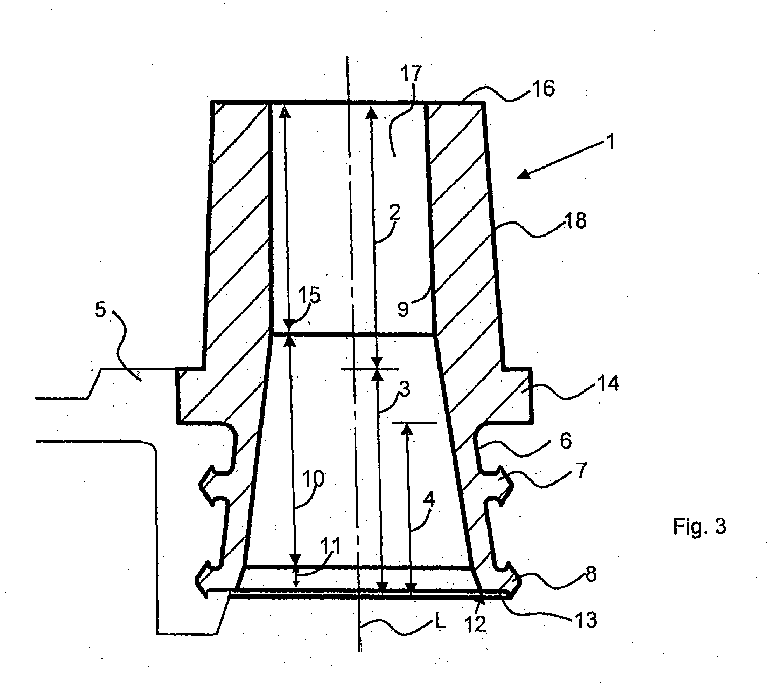

In der Figur 3 ist eine verkleinerte Ausführungsform eines Anschlusspols 1 dargestellt. Der Außendurchmesser des Anschlusspols im Anschlussabschnitt 2 entspricht dem Außendurchmesser des Anschlusspols 1 gemäß Figur 1. Der Hohlraum 17 weist hingegen einen geringeren Durchmesser im Vergleich zur Figur 1 auf. In der Ausführungsform gemäß Figur 3 erstreckt sich der erste Abschnitt 10 der konisch verlaufenden Innenwand 9 über den Befestigungsabschnitt 3 hinaus bis in den Anschlussabschnitt 2.

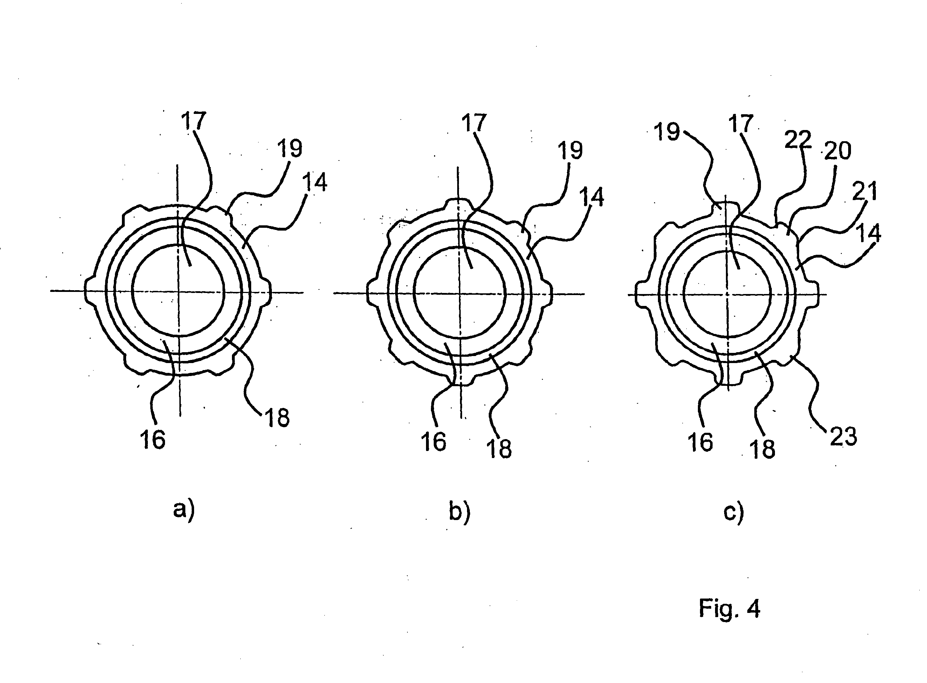

Die Figur 4 zeigt in den Figuren 4 a), 4b) und 4c) verschiedene Ausführungsformen des Anschlusspols 1 in Draufsicht, und zwar von der Seite der Abschlussfläche 16. Erkennbar ist in allen drei Ausführungsformen die obere Abschlussfläche 16, die äußere Seitenwand 18, der innere Hohlraum 17 sowie der umlaufende Vorsprung 14.

Der umlaufende Vorsprung 14 weist eine äußere Verzahnung auf, die durch Zähne 19, 20, 23 dargestellt ist. Durch die Zähne 19, 20, 23 wird ein Verdrehschutz des Anschlusspols in dem Kunststoffmaterial des Akkumulatorgehäuses realisiert. Hierbei zeigt die Figur 4 a) eine vorteilhafte Ausführungsform, bei der sechs Zähne 19 gleichmäßig über den Umfang des Anschlusspols 1 verteilt angeordnet sind. Die Figur 4 b) zeigt eine vorteilhafte Ausführungsform mit acht über den Umfang des Anschlusspols 1 gleichmäßig verteilt angeordneten Zähnen 19.

Die Figur 4 c) entspricht soweit der Ausführungsform gemäß Figur 4 b), wobei bei Figur 4 c) als vorteilhafte Weiterbildung Zähne 20, 23 mit unsymmetrischen Zahnflanken 21, 22 vorgesehen sind. So weist die Zahnflanke 21 bezüglich des Außenumfangs des umlaufenden Vorsprungs 14 einen geringeren Winkel auf als die Zahnflanke 22. Der Zahn 23 ist vergleichbar wie der Zahn 20 mit unsymmetrischen Zahnflanken ausgebildet. Hierbei ist der Zahn 23 spiegelsymmetrisch zu dem Zahn 20 angeordnet. Durch die mit geringerem Winkel ausgebildeten Zahnflanken 21 wird die Möglichkeit geschaffen, den Anschlusspol mittels einer Backenform herzustellen. Beim Entformen können die Backen hierdurch ohne weiteres vom Anschlusspol getrennt werden, da in Trennrichtung kein Hinterschnitt auftritt.

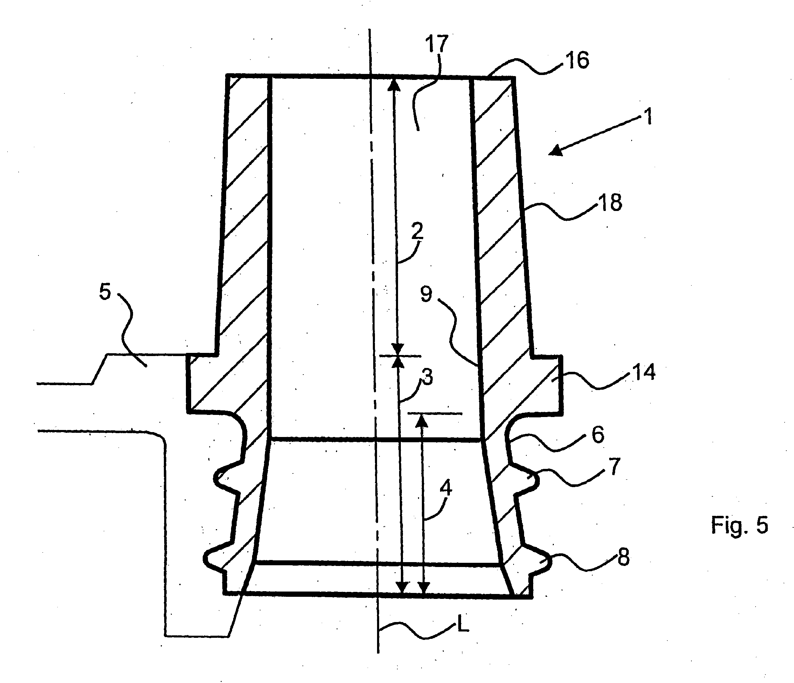

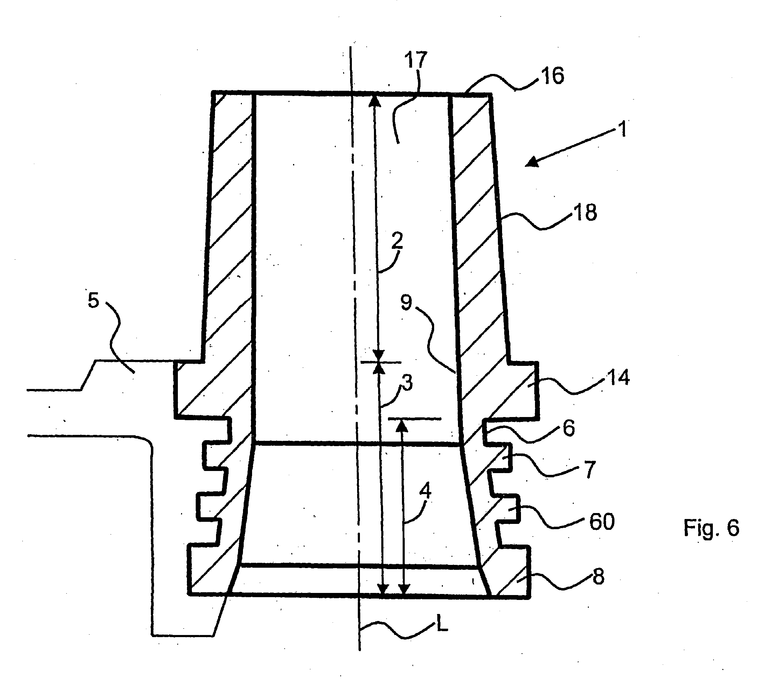

Die Figuren 5 und 6 zeigen weitere Ausführungsformen des Anschlusspols 1. Die Ausführungsformen gemäß Figur 5 und 6 weisen im Vergleich zu der Ausführungsform gemäß Figur 1 vorteilhafte alternative Profilierungsmöglichkeiten der umlaufenden Vorsprünge im Labyrinthabschnitt 4 auf. Zudem ist in den Ausführungsformen gemäß Figur 5 und 6 der ringförmige Abschnitt 13 im unteren Bereich des Hohlraums 17 nicht vorgesehen.

Gemäß Figur 5 werden umlaufende Vorsprünge 7, 8 am Außenumfang des Anschlusspols 1 im Labyrinthabschnitt 4 mit einem abgerundeten Profil vorgeschlagen. Vorgesehen sind zwei umlaufende Vorsprünge 7, 8 mit im Wesentlichen gleichem Profil.

Gemäß Figur 6 werden umlaufende Vorsprünge 7, 8, 60 am Außenumfang der Anschlussbuchse 1 im Labyrinthbereich 4 vorgeschlagen, die ein im Wesentlichen rechteckiges, insbesondere quadratisches, Profil aufweisen. In einer vorteilhaften Ausgestaltung sind drei umlaufende Vorsprünge 7, 8, 60 vorgesehen. In einer vorteilhaften Ausgestaltung weist dabei der an dem dem Anschlussabschnitt 2 abgewandten Ende des Anschlusspols 1 vorgesehene umlaufende Vorsprung 8 einen größeren Querschnitt auf als die umlaufenden Vorsprünge 7, 60.

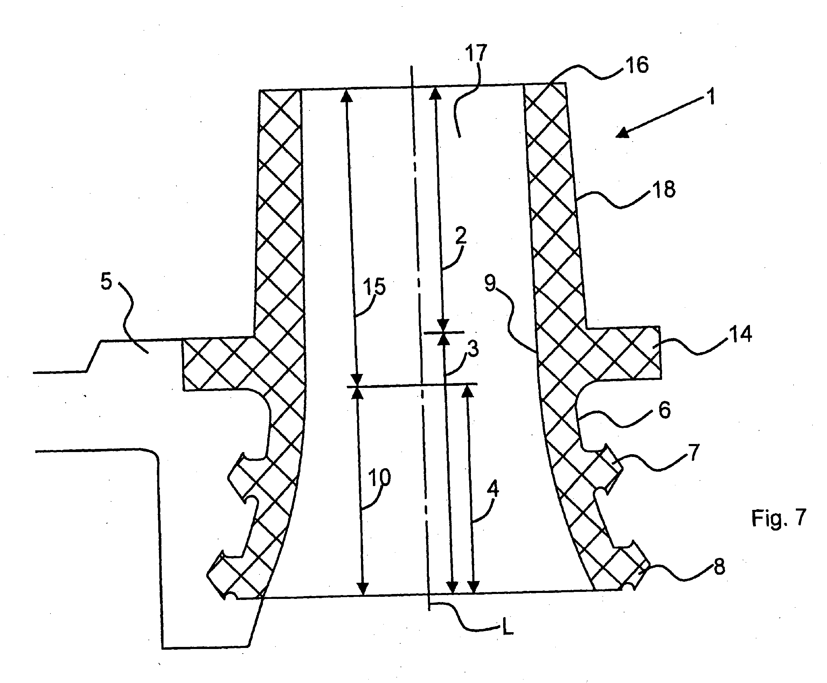

Die zuvor beschriebenen Ausführungsformen der Anschlusspole weisen jeweils lineare Profile in Längsrichtung auf, d.h. entsprechende konische Abschnitte. Die Figur 7 zeigt eine Ausführungsform eines Anschlusspols 1 mit bogenförmigem Verlauf der Innenwand 9 und der Außenwand 6 im Befestigungsabschnitt 3. Anschlusspole gemäß Figur 7 werden insbesondere für den Nutzfahrzeugbereich eingesetzt. Wie erkennbar ist, verlaufen die Außenwand 6 und die Innenwand 9 in dem Befestigungsabschnitt 3 zumindest in den Bereichen, in denen kein umlaufender Vorsprung 7, 8 angeordnet ist, parallel, so dass eine gleich bleibende Wandstärke in diesen Abschnitten gebildet wird. Der Außenumfang und der Innenumfang des Anschlusspols 1 nehmen in dem Befestigungsabschnitt bzw. in dem Labyrinthabschnitt 4 nach unten, d.h. in Richtung zu der Einführseite für eine Polbuchse, stetig zu. Hierdurch kann in den oberhalb des umlaufenden Vorsprungs 8 bis zu dem umlaufenden Vorsprung 14 hin eine Materialeinsparung am Außenumfang realisiert werden. Hierdurch wird auch der in Figur 7 dargestellte NKW-Anschlusspol leichter ausgebildet als bekannte NKW-Anschlusspole.

## Patentansprüche

1. Anschlusspol (1) für einen Akkumulator mit folgenden Merkmalen:
a) der Anschlusspol (1) weist einen Anschlussabschnitt (2) auf, in dem eine Polklemme am Anschlusspol (1) befestigbar ist,
b) der Anschlusspol (1) weist einen Befestigungsabschnitt (3) auf, in dem der Anschlusspol (1) in einem Gehäuseteil (5) des Akkumulators befestigbar ist,
c) der Befestigungsabschnitt (3) weist einen Labyrinthabschnitt (4) auf,
d) die Außenwand (6) des Anschlusspols (1) weist im Labyrinthabschnitt (4) wenigstens einen umlaufenden Vorsprung (7, 8) auf,
e) der Umfang der Außenwand (6) des Anschlusspols (1) nimmt in wenigstens einem nicht mit einem umlaufenden Vorsprung (7, 8) versehenen Abschnitt des Labyrinthabschnitts (4) in von dem Anschlussabschnitt (2) fortweisender Richtung zu,
f) der Anschlusspol (1) ist innen hohl und der Umfang der Innenwand (9) des Anschlusspols (1) nimmt in wenigstens einem ersten Abschnitt (10) des Labyrinthabschnitts (4) in von dem Anschlussabschnitt (2) fortweisender Richtung zu,
**dadurch gekennzeichnet, dass**
g) die Innenwand (9) und die Außenwand (6) des Anschlusspols (1) in dessen Längsrichtung (L) in dem Labyrinthabschnitt (4) zumindest abschnittsweise parallel verlaufen.

2. Anschlusspol nach Anspruch 1, **dadurch gekennzeichnet, dass** der Umfang der Außenwand (6) des Anschlusspols (1) im gesamten Labyrinthabschnitt (4) in den nicht mit einem umlaufenden Vorsprung (7, 8) versehenen Bereichen in von dem Anschlussabschnitt (2) fortweisender Richtung zunimmt.

3. Anschlusspol nach einem der vorhergehenden Ansprüche, **dadurch gekennzeichnet, dass** der Labyrinthabschnitt (4) eine geringere Erstreckung in Längsrichtung (L) des Anschlusspols (1) aufweist als der Befestigungsabschnitt (3).

4. Anschlusspol nach einem der vorhergehenden Ansprüche, **dadurch gekennzeichnet, dass** der wenigstens eine umlaufende Vorsprung (7, 8) ein hakenförmiges Profil aufweist.

5. Anschlusspol nach Anspruch 1, **dadurch gekennzeichnet, dass** der erste Abschnitt (10), in dem der Umfang der Innenwand (9) zunimmt, in Längsrichtung (L) des Ahschlusspols (1) nicht über den Abschnitt hinausragt, in dem der Umfang der Außenwand (6) zunimmt.

6. Anschlusspol nach Anspruch 1, **dadurch gekennzeichnet, dass** der erste Abschnitt (10), in dem der Umfang der Innenwand (9) zunimmt, in Längsrichtung (L) des Anschlusspols (1) Ober den Abschnitt hinausragt, in dem der Umfang der Außenwand (6) zunimmt.

7. Anschlusspol nach einem der vorhergehenden Ansprüche, **dadurch gekennzeichnet, dass** der Anschlusspol (1) innen hohl ist und der Umfang der Innenwand (9) des Anschlusspols (1) in dem Anschlüssabschnitt (2) in Richtung zum Labyrinthabschnitt hin zunimmt.

8. Anschlusspol nach einem der vorhergehenden Ansprüche, **dadurch gekennzeichnet, dass** der Umfang der Innenwand (9) und/oder der Außenwand (6) monoton linear oder bogenförmig zunimmt.

9. Anschlusspol nach Anspruch 8, **dadurch gekennzeichnet, dass** die bogenförmige Zunahme des Umfangs in von dem Anschlussabschnitt (2) fortweisender Richtung progressiv ist.

10. Anschlusspol nach Anspruch 8 oder 9, **dadurch gekennzeichnet, dass** die Außenwand (6) und/oder die Innenwand (9) in Längsrichtung (L) des Anschlusspols einen einschalig hyperboloiden Verlauf aufweist.

11. Anschlusspol nach Anspruch 8, **dadurch gekennzeichnet, dass** die Außenwand (6) und/oder die Innenwand (9) in von dem Anschlussabschnitt (2) fortweisender Richtung konisch vergrößert ist.

12. Anschlusspol nach Anspruch 11, **dadurch gekennzeichnet, dass** die Innenwand (9) des Anschlusspols (1) in wenigstens einem zweiten Abschnitt (11) des Labyrinthabschnitts (4) in von dem Anschlussabschnitt (2) fortweisender Richtung konisch vergrößert ist, wobei die Innenwand (9) im zweiten Abschnitt (11) einen größeren Winkel (γ) zur Längsachse (L) des Anschlusspols (1) bildet als in dem ersten Abschnitt (10).

13. Akkumulatorgehäuse oder Teil (5) davon mit wenigstens einem Anschlusspol (1) nach einem der vorhergehenden Ansprüche, wobei der wenigstens eine Anschlusspol (1) im Befestigungsabschnitt (3) mittels Spritzgießtechnik in einem Akkumulatorgehäuseteil (5) eingebettet ist.

## Claims

1. A connecting pole (1) for a rechargeable battery having the following features:
a) the connecting pole (1) has a connecting section (2) in which a pole terminal can be fixed to the connecting pole (1),
b) the connecting pole (1) has a fixing section (3) in which the connecting pole (1) can be fixed within a housing part (5) of the rechargeable battery,
c) the fixing section (3) comprises a labyrinth section (4),
d) the outer wall (6) of the connecting pole (1) has at least one circumferential projection (7, 8) in the labyrinth section (4),
e) the circumference of the outer wall (6) of the connecting pole (1) increases away from the connecting section (2) in at least one section of the labyrinth section (4) not provided with a circumferential projection (7, 8),
f) the connecting pole (1) is hollow on the inside and the circumference of the inner wall (9) of the connecting pole (1) increases away from the connecting section (2) in at least one first section (10) of the labyrinth section (4),
**characterized in that**
g) at least sections of the inner wall (9) and the outer wall (6) of the connecting pole (1) run parallel in the longitudinal direction (L) of same within the labyrinth section (4).

2. The connecting pole according to claim 1,
**characterized in that**
the circumference of the outer wall (6) of the connecting pole (1) increases away from the connecting section (2) throughout the labyrinth section (4) within sections not provided with a circumferential projection (7, 8).

3. The connecting pole according to one of the preceding claims,
**characterized in that**
the labyrinth section (4) has less extension in the longitudinal direction (L) of the connecting pole (1) than the fixing section (3).

4. The connecting pole according to any one of the preceding claims,
**characterized in that**
the at least one circumferential projection (7, 8) has a hook-like profile.

5. The connecting pole according to claim 1,
**characterized in that**
the first section (10) in which the circumference of the inner wall (9) increases does not project in the longitudinal direction (L) of the connecting pole (1) beyond the section in which the circumference of the outer wall (6) increases.

6. The connecting pole according to claim 1,
**characterized in that**
the first section (10) in which the circumference of the inner wall (9) increases projects in the longitudinal direction (L) of the connecting pole (1) beyond the section in which the circumference of the outer wall (6) increases.

7. The connecting pole according to any one of the preceding claims,
**characterized in that**
the connecting pole (1) is hollow on the inside and the circumference of the inner wall (9) of the connecting pole (1) increases within the connecting section (2) toward the labyrinth section.

8. The connecting pole according to any one of the preceding claims,
**characterized in that**
the circumference of the inner wall (9) and/or the outer wall (6) increases monotonically linearly or arcuately.

9. The connecting pole according to claim 8,
**characterized in that**
the arcuate increase in the circumference away from the connecting section (2) is progressive.

10. The connecting pole according to claim 8 or 9,
**characterized in that**
the outer wall (6) and/or the inner wall (9) exhibit(s) a monolithic hyperboloid profile in the longitudinal direction (L) of the connecting pole.

11. The connecting pole according to claim 8,
**characterized in that**
the outer wall (6) and/or the inner wall (9) conically enlarge away from the connecting section (2).

12. The connecting pole according to claim 11,
**characterized in that**
the inner wall (9) of the connecting pole (1) conically enlarges away from the connecting section (2) in at least one second section (11) of the labyrinth section (4), wherein the inner wall (9) forms a larger angle (γ) relative to the longitudinal axis (L) of the connecting pole (1) in the second section (11) than in the first section (10).

13. A rechargeable battery housing or part (5) of same having at least one connecting pole (1) in accordance with any one of the preceding claims, wherein the at least one connecting pole (1) is embedded in the fixing section (3) of a rechargeable battery housing part (5) by means of injection molding.

## Revendications

1. Pôle de connexion (1) pour un accumulateur, comprenant les éléments techniques suivants:
a) le pôle de connexion (1) comprend une portion de connexion (2) dans laquelle une pince de pôle est susceptible d'être fixée au pôle de connexion (1),
b) le pôle de connexion (1) comprend une portion de fixation (3) dans laquelle le pôle de connexion (1) est susceptible d'être fixé dans une partie de boîtier (5) de l'accumulateur,
c) la portion de fixation (3) comprend une portion en labyrinthe (4),
d) la paroi extérieure (6) du pôle de connexion (1) comprend au moins une saillie périphérique (7, 8) dans la portion en labyrinthe (4),
e) dans au moins un tronçon, qui n'est pas doté de la saillie périphérique (7, 8), de la portion en labyrinthe (4) la circonférence de la paroi extérieure (6) du pôle de connexion (1) augmente dans la direction en éloignement de la portion de connexion (2),
f) le pôle de connexion (1) est creux à l'intérieur et la circonférence de la paroi intérieure (9) du pôle de connexion (1) augmente dans au moins un premier tronçon (10) de la portion en labyrinthe (4) dans la direction en éloignement de la portion de connexion (2), **caractérisé en ce que**
g) la paroi intérieure (9) et la paroi extérieure (6) du pôle de connexion (1) s'étendent parallèlement au moins localement dans la direction longitudinale (L) du pôle dans la portion en labyrinthe (4).

2. Pôle de connexion selon la revendication 1,
**caractérisé en ce que,**
dans la totalité de la portion en labyrinthe (4), dans les régions qui ne sont pas pourvues d'une saillie périphérique (7, 8), la circonférence de la paroi extérieure (6) du pôle de connexion (1) augmente dans la direction en éloignement de la portion de connexion (2).

3. Pôle de connexion selon l'une des revendications précédentes,
**caractérisé en ce que**
la portion en labyrinthe (4) présente une extension, en direction longitudinale (L) du pôle de connexion (1), plus faible que la portion de fixation (3).

4. Pôle de connexion selon l'une des revendications précédentes,
**caractérisé en ce que**
ladite au moins une saillie périphérique (7, 8) présente un profil en forme de crochet.

5. Pôle de connexion selon la revendication 1,
**caractérisé en ce que**
le premier tronçon (10) dans lequel la circonférence de la paroi intérieure (9) augmente, ne dépasse pas, en direction longitudinale (L) du pôle de connexion (1), au-delà du tronçon dans lequel la circonférence de la paroi extérieure (6) augmente.

6. Pôle de connexion selon la revendication 1,
**caractérisé en ce que**
le premier tronçon (10) dans lequel la circonférence de la paroi intérieure (9) augmente, dépasse, en direction longitudinale (L) du pôle de connexion (1), au-delà du tronçon dans lequel la circonférence de la paroi extérieure (6) augmente.

7. Pôle de connexion selon l'une des revendications précédentes,
**caractérisé en ce que**
le pôle de connexion (1) est creux à l'intérieur, et la circonférence de la paroi intérieure (9) du pôle de connexion (1) augmente dans la portion de connexion (2) en direction de la portion en labyrinthe.

8. Pôle de connexion selon l'une des revendications précédentes,
**caractérisé en ce que**
la circonférence de la paroi intérieure (9) et/ou de la paroi extérieure (6) augmente de manière monotone sous forme linéaire ou sous forme arquée.

9. Pôle de connexion selon la revendication 8,
**caractérisé en ce que**
l'augmentation sous forme arquée de la circonférence dans la direction en éloignement de la portion de connexion (2) est progressive.

10. Pôle de connexion selon la revendication 8 ou 9,
**caractérisé en ce que**
la paroi extérieure (6) et/ou la paroi intérieure (9) présente un tracé monocoque hyperboloïde dans la direction longitudinale (L) du pôle de connexion.

11. Pôle de connexion selon la revendication 8,
**caractérisé en ce que**
la paroi extérieure (6) et/ou la paroi intérieure (9) s'agrandit de manière conique dans la direction en éloignement de la portion de connexion (2).

12. Pôle de connexion selon la revendication 11,
**caractérisé en ce que**
la paroi intérieure (9) du pôle de connexion (1) s'agrandit de manière conique, dans au moins un second tronçon (11) de la portion en labyrinthe (4) dans la direction en éloignement de la portion de connexion (2), et la paroi intérieure (9) forme, dans le second tronçon (11), un angle (▪) par rapport à l'axe longitudinal (L) du pôle de connexion (1) plus grand que dans le premier tronçon (10).

13. Boîtier d'accumulateur, ou partie (5) de celui-ci, comprenant au moins un pôle de connexion (1) selon l'une des revendications précédentes, dans lequel ledit au moins un pôle de connexion (1) est noyé dans la portion de fixation (3) au moyen d'une technique de moulage par injection, dans une partie (5) boîtier d'accumulateur.
